Europäisches Patentamt

European Patent Office

Office européen des brevets

(19)

(11) Veröffentlichungsnummer: **0 248 232**
**A2**

(12) **EUROPÄISCHE PATENTANMELDUNG**

(21) Anmeldenummer: **87106675.9**

(22) Anmeldetag: **08.05.87**

(51) Int. Cl.³: **A 23 G 1/20**
**A 23 G 3/20**

(30) Priorität: **09.05.86 IT 2038486**

(43) Veröffentlichungstag der Anmeldung:
**09.12.87 Patentblatt 87/50**

(84) Benannte Vertragsstaaten:
**AT BE CH DE FR GB IT LI LU NL SE**

(71) Anmelder: **CARLE & MONTANARI S.p.A.**
**Via Neera 39**
**I-20141 Milano(IT)**

(72) Erfinder: **Cerboni, Renzo**
**Via Lorenteggio 24**
**I-20146 Milano(IT)**

(74) Vertreter: **de Dominicis, Riccardo et al,**
**de Dominicis & Partners s.a.s. Via Brera, 6**
**I-20121 Milano(IT)**

(54) **Mehrteilige Giessplatte fuer Schokoladenprodukte.**

(57) Mehrteilige Giessplatte fuer massive und gefuellte Schokoladenprodukte, enthaltend, fuer jede Austragbohrung der Giessmaschine, einen Eingangskanal (6), der in eine einen geschlitzten (9a, 9b) hin- und herbewegbaren Verteilungsschieber (9) aufnehmende gemeinsame Verteilungskammer (8) einmuendet, die fuer jeden Eingangskanal (6) eine erste und eine zweite Ausgangsabzweigung (9a bzw. 9b) aufweist, die jeweils in eine Austragduese (7) fuer einen zugeordneten Giessformhohlraum (5) einmuendet, so dass, bei Schieber (9) in der einen Schieberhubendstellung, jeder Eingangskanal (6) mit der ersten Ausgangsabzweigung (9a) und, bei Schieber (9) in der anderen Schieberhubendstellung, jeder Eingangskanal (6) mit der zweiten Ausgangsabzweigung (9b) verbunden ist. Fuer gefuellte Produkte werden vorteilhafterweise zwei oder mehrere uebereinander angeordnete Gruppen von geschlitzten Schiebern (30, 33; 30', 33') vorgesehen, die in entsprechenden Verteilungskammern (29, 31; 29', 31') aufgenommen sind, die jeweils vertikal koaxiale und in eine Austragduese (42) konzentrisch einmuendende erste (34, 38; 36, 40) und zweite (35, 39; 37, 41) Ausgangsabzweigungen aufweisen.

Die Schieber (30, 33; 30', 33') sind von einer oder mehreren Zylinder-Kolben-Einheiten (10) hin- und herbewegt. Bei jedem Hub der Giessmaschinenkolben wird deshalb abwechselnd ueber die ersten Ausgangsabzweigungen (34, 38; 36, 40) und nachfolgend ueber die zweite Ausgangsabzweigungen u.s.w. (35, 39; 37, 41) gegossen. Die erzielte Produktdosierung ist tadellos. Fuer die One-Shot-Produkte wird in jeder Giessform eine Hohlraumzahl vorgesehen, die gleich der Zahl der in der Giessmaschine vorgesehenen Kolben ist.

FIG. 11

Die vorliegende Erfindung bezieht sich auf eine mehrteilige Giessplatte fuer Schokoladenprodukte.

Wie an sich bekannt, koennen die Schokoladenprodukte, wie Pralinen und dergleichen, massiv, d. h. nur aus Schokolade bestehend, oder gefuellt sein. Im letzteren Falle kann die Fuellung z. B. aus Creme, Likoer oder dergleichen bestehen. Diese Pralinen und dergleichen werden mittels Giessformen hergestellt, die im wesentlichen aus einer Giessplatte bestehen, die auf ihrer nach oben gerichtete Oberseite eine Anzahl von Hohlraeumen aufweist, in die die Schokolade, bzw. die Schokolade und die Fuellung, von einer Giessmaschine gegossen werden, wobei die letztere entweder hin- und hergehende Kolben oder drehbare Kolben enthalten kann. Ein Beispiel einer mit hin- und hergehenden Kolben versehenen Giessmaschine ist dem italienischen Patent Nr. 488 620 entnehmbar, wogegen ein Beispiel einer mit drehbaren Kolben versehenen Giessmaschine durch die italienische Patentanmeldung Nr. 20589 A/83 offenbart ist.

Zwischen den Austragbohrungen der Giessmaschine, die z. B. fuer gefuellte Pralinen zwei Gruppen von hin- und hergehenden Zylinder-Kolben-Einheiten oder zwei Gruppen von drehbaren Kolben aufweisen kann, welche Austragbohrungen in der Unterseite der Giessmaschinen ausmuenden und der darunter stehenden Giessform ist eine Giessplatte zwischengelegt, deren Aufgabe darin besteht, die erforderlichen Durchgangsstrecken fuer die Schokolade bzw. die Fuellung zu bilden, die es ermoeglichen, die genannen Austragsbohrungen der Giessmaschine mit den Hohlraeumen der jeweiligen Giessform zu verbinden. Dies ist aus verschiedenen Gruenden erforderlich, vor allem deshalb, weil die Hohlraeume in den Giessplatten nicht mit der gleichen Anzahl, Anordnung und Teilung wie fuer die Austragbohrungen der Giessmaschine vorgesehen, zur Verfuegung stehen. Mit ein und derselben Giessmaschine ist es in der Tat moeglich, eine Anzahl von jeweils je nach den herzustellenden Schokoladenprodukten, eine verschiedene Anzahl und Gestaltung der Hohlraeume aufweisenden Giessformen zu verwenden.

Im Falle von massiven Pralinen ist schon eine aus zwei Einzelplatten bestehende mehrteilige Giessplatte bekannt (italienisches Patent Nr. 955 370), bei der fuer jede Austragbohrung der Giessmaschine eine sich in zwei Ausgangsaesten spaltende Schokoladendurchgangsstrecke vorgesehen ist, so dass fuer jede Austragbohrung der Giessmaschine zwei Hohlraeume der Giessform mit Schokolade gespeist werden. Daraus folgt, dass die Zahl der in jeder Giessform herstellbaren Hohlraeume der Dopplzahl der Kolben bzw. Austragbohrungen der Giessmaschine entspricht. Auch die Leistung der Anlage wird damit verdoppelt. Fuer kleinere Schokoladenerzeugnisse, z. B. kleinere Pralinen, sind ebenfalls aus drei oder mehreren Einzelplatten bestehende mehrteilige Giessplatten bekannt, wobei es mit diesen Einzelplatten moeglich ist, Abzweigungen mit drei oder mehreren Ausgangsaesten auszuarbeiten. Auf diese Weise wird die Anzahl der Hohlraeume entsprechend erhoeht und man erzielt eine gute Ausnutzung der Giessformoberflaeche. In der Praxis ist jedoch feststellbar, dass es mit solchen verzweigten Schokoladenleitstrecken nicht moeglich ist, einwandfreie Dosierungen, d. h. ein tadelloses Gewicht der einzelnen Pralinen oder dergleichen zu gewaehrleisten, wie dagegen in Anbetracht der von den spezifischen strengen Normen in verschiedenen Laendern vorgesehenen, sehr enge Gewichtstoleranzen wuenschenswert waeren. Diese Verteilungs- und Unterteilungsungenauigkeit des zu jedem Eingangskanal der Giessplatte gelangenden Schokoladenflusses nimmt mit der Zunahme der Viskositaet der behandelten Schokolade zu.

Im Fall von gefuellten Pralinen weisen dagegen die bekannten Giessplatten fuer jeden Hohlraum der Giessform zwei im allgemeinen konzentrisch angeordnete Leitkanaele auf, die in einen Giessformhohlraum einmuenden, wobei der eine Leitkanal mit einer Austragbohrung der Giessmaschine fuer die Schokolade und der andere Leitkanal mit einer Austragbohrung der Giessmaschine fuer die Fuellung bzw. Creme verbunden sind. Daraus folgt, dass mit diesem "One Shot" genannten Giessverfahren die Zahl der Hohlraeume in der Giessform der Haelfte der Zahl der Austragbohrungen der Giessmaschine entspricht. Man hat deshalb eine schlechte Ausnutzung der Giessformoberflaeche, d. h. ein schlechtes Verhaeltnis Giessformoeberflache / Anzahl der Hohlraeume, weil es bei der gleichen Giessformoberflaeche ohne weitere moeglich waere, eine groessere Anzahl von Hohlraeumen auszuarbeiten. Die Notwendigkeit, in jeden Giessformhohlraum zwei Leitkanaele einmuenden zu lassen, und zwar der eine fuer die Schokolade und der andere fuer die Fuellung, verhindert in der Praxis die Anwendung des Kanalabzweigungsprinzips, wie dagegen fuer die massiven Pralinen verwendet wird, und dies auch, wenn man den Nachteil der Ungenauigkeit der Schokoladen- bzw. Fuellungsverteilung in Kauf nehmen wuerde. Es ist ferner hervorzuheben, dass fuer diese gefuellten im allgemeinen auch "one shot" genannten Produkte als Fuellung die verschiedensten Produkte eingesetzt werden, wie z. B. Cremen, Likoere, Fondant usw., die eigene und spezifische Dosierungsschwierigkeiten aufweisen. Z. B. im Falle von Fondant, der, wie an sich bekannt, ein sehr schnell kristallisierendes Zuckerprodukt, d. h. ein Produkt mit variabler Viskositaet ist, ist die Unsicherheit bezueglich einer gleichmaessigen Produktverteilung sehr hoch. In der Tat koennte es vorkommen, dass waehrend des Giessvorganges in einen verzweigten Kanal sowie auch in einen Hohlraum kristallinische Agglomerate entstehen, die den Fluss des restlichen Fondants verhindern, wodurch die Fondantdosierung in beiden Hohlraeumen sehr ungenau ist und die erzeugten Pralinen zu Abfallmaterial werden.

Es waere denkbar, in der Giessform eine Anzahl von Hohlraeumen vorzusehen, die der Anzahl der Giessmaschinenkolben entspricht und zuerst in einer Hohlraumhaelfte zu giessen und, nach Durchfuehrung einer entsprechenden Verschiebung der Giessmaschine bzw. der Giessform, in die zweite Hohlraumhaelfte zu

0248232

giessen, wobei diese nacheinander erfolgenden Austragungen waehrend eines Kolbenhubs stattfinden. Auch in diesem Fall waere die Dosierung ziemlich unregelmaessig und darueber hinaus wuerden die Austraggesamtzeiten zunehmen, wodurch letzten Endes kein Vorteil bezueglich der Giessmaschinenleistung zu erreichen waere. Im Gegenteil sollte man sehr gravierende Schwierigkeiten zur Verschiebung der Giessmaschine, die bekanntlich ein sehr hohes Gewicht aufweist, oder der Giessformen, indem man auf die Foerderketten derselben eingreift, was einen sehr betraechtlichen Aufwand an Steuer- und Synchronismusapparaturen mit sich bringen wird, loesen.

Aufgrund des oben erwaehnten bekannten Standes der Technik liegt der vorliegenden Erfindung die Aufgabe zugrunde, eine mehrteilige Giessplatte fuer massive und gefuelte Schokoladenprodukte herzustellen, die in der Lage ist, eine tadellose Produktverteilung bzw. ein einwandfreies Gewicht der verteilten Schokolade bzw. Fuellung zu gewaehrleisten, und dies unabhaengig von der Viskositaet der Schokolade, bzw., im Falle von gefuellten Pralinen unabhaengig von dem jeweils vorgesehenen Fuellungsprodukt.

Im Rahmen der der vorliegenden Erfindung zugrunde gelegten Aufgabe liegt im Falle von gefuellten Pralinen ferner der Vorschlag, eine mehrteilige Giessplatte herzustellen, die faehig ist, die Fuellung in jeder Giessform einer Zahl von Hohlraeumen, welche Hohlraumanzahl der Zahl der Austragbohrungen der Giessmaschine entspricht, zu ermoeglichen, und dies ohne Relativbewegung zwischen der Giessmaschine und der darunterstehenden Giessform.

Die erwaehnte Aufgabe wird nach der Lehre vorliegender Erfindung durch die Merkmale geloest, die dem kennzeichnenden Teil des Anspruchs 1 entnehmbar sind.

Weitere strukturelle Merkmale sind dem kennzeichnenden Teilen der weiteren Ansprueche entnehmbar.

Mit den mehrteiligen Giessplatten gemaess vorliegender Erfindung werden zahlreiche Vorteile erreicht. Vor allem wird die Wiederholbarkeit einer gewichtsmaessig einwandfreien Austragzuverlaessigkeit gewaehrleistet, so dass die auf unregelmaessige Dosierungen zurueckzufuehrenden Pralinenabfaelle praktisch beseitigt sind. Die Herstellung der Giessplatte sowie des Schiebers bzw. der Schieber ist aeusserst einfach, und die Arbeitsweise ist aeusserst zuverlaessig.

Die Steuermittel zur Durchfuehrung der Hin- und Herbewegung fuer den Schieber bzw. den Kaefigschieber sind vorteilhafterweise ueblicher Art und weisen eine zuverlaessige Arbeitsweise auf. Die erfindungsgemaesse Giessplatte weist ferner einen Raumbedarf auf, der dem Raumbedarf der zur Zeit verwendeten Giessplatten entspricht, wodurch es ohne weiteres moeglich ist, die erfindungsgemaessen Giessplatten in schon bestehenden Giessmaschinen ohne besondere Anpassungsarbeiten zu verwenden.

Bei der gleichen Giessplatte kann man ferner eine Anzahl von zueinander steif verbindbaren Schiebern vorsehen, die gleichzeitig oder getrennt steuerbar sind. Im Falle von massiven Pralinen ist es vorteilhaft, mehrere sich im wesentlichen in der gleichen Horizontalebene befindenden Schieber vorzusehen, wogegen fuer die massiven Pralinen die Schieber uebereinanderangeordnet sind, so dass die konzentrische Anordnung eines Schokoladenausgangskanals und eines diesem zugeordneten Fuellungsausgangskanals fuer den gleichen Hohlraum erleichtert ist. Der Raumbedarf der Schieber selbst ist aeusserst klein, so dass die Ausarbeitung der Verteilungskammern den erforderlichen Widerstand der mehrteiligen Giessplatte ueberhaupt nicht beeintraechtigt, obwohl ein Raumbedarf eingehalten wird, der dem Raumbedarf der ueblichen Giessplatten entspricht. Aufgrund der aeusserst klein gehaltenen Massen der Schieber, bereiten die letzteren keine Schwierigkeit bei der Erzielung einer schnellen hin- und hergehenden Bewegung bzw. Verschiebung dieser Schieber, wodurch die Leistung der Giessmaschine betraechtlich erhoeht wird. Im Falle von mit drehbaren Kolben versehenen Giessmaschinen, die funktionell mit Zweitaktmotoren verglichen werden koennen, und bei welchen fuer die hin- und hergehenden Kolben unvermeidbaren Unkehrungstotzeiten vollkommen fehlen, ist es moeglich, besonders hohe Giessplattenleistungen zu erzielen. Vorteilhafterweise erfolgt die Dosierung bzw. Austragung bei jedem Hohlraum mit einem eigenen Hub des zugeordneten Kolbens. Die Huebe der Schieber sind aeusserst klein, z. B. in der Groessenordnung von 10 - 15mm, wodurch die Verschiebungszeiten ganz unerheblich sind und die Zeit zur Durchfuehrung des Giessvorganges praktisch nicht beeinflussen.

Weitere Merkmale, Vorteile und Einzelheiten der erfindungsgemaessen mehrteiligen Giessplatte sind ferner der nachfolgenden Beschreibung unter Bezugnahme auf die beigefuegten Zeichnungen entnehmbar, in welchletzteren die erfindungsgemaesse Giessplatte aufgrund einer ersten Ausfuehrungsform fuer die massiven Pralinen sowie aufgrund einer zweiten Ausfuehrungsform fuer die gefuellten Pralinen, welche Ausfuehrungsformen lediglich beispielsweise angegeben sind, dargestellt ist.

Es zeigen:

Fig. 1 eine perspektivische Ansicht auf eine mehrteilige Giessplatte fuer massive Pralinen, bei der eine Anzahl von Austragduesen vorgesehen ist, die doppelt in bezug auf die Anzahl der Schokoladeneingangsbohrungen ist;
Fig. 2 eine Ansicht von unten der Giessplatte von Fig. 1;
Fig. 3 das Detail A von Fig. 1 in groesserem Mass-stab, mit Darstellung der Austragbohrungen der Giessplatte und des geschlitzten Schiebers bei einer Schieberhubendstellung desselben;
Fig. 4 eine Ansicht aehnlich wie die von Fig. 3, jedoch mit in seiner anderen Schieberhubendstellung bewegten Schieber;

Fig. 5 einen Querschnitt entlang der Linie V–V in Fig. 3;

Fig. 6 einen aehnlichen Querschnitt entlang der Linie V1-V1 in Fig. 4;

Fig. 7 eine Draufsicht auf eine Giessform;

Fig. 8 eine Draufsicht auf eine mehrteilige Giessplatte gemaess vorliegender Erfindung zur Herstellung von one shot bzw. gefuellten Pralinen;

Fig. 9 eine Sicht von unten auf die Giessplatte von Fig. 8;

Fig. 10 eine teilweise Draufsicht in groesserem Mass-stab der Giessplatte von Fig. 8, bei der mit Strichlinie jeweils ein oberer und ein unterer Schieber sowie ein Detail entlang der Linie X11-X11 von Fig. 12 dargestellt sind;

Fig. 11 einen Schnitt entlang der Linie X1-X1 von Fig. 10, mit Mehrfachschieber bzw. Kaefigschieber in einer Schieberhubendstellung;

Fig. 12 einen Schnitt aehnlich wie in Fig. 11, jedoch mit in seinem anderen Schieberhubendstellung verschobenen Schieber;

Fig. 13 eine perspektivische Ansicht des Schiebers, der in der in den vorherigen Figuren 8 – 12 dargestellten Giessplatte verwendet wird;

Fig. 14 und 15 jeweils eine teilweise Draufsicht auf einen Oberschieber und einen Unterschieber des in Fig. 13 dargestellten Kaefigschiebers; und

Fig. 16 eine Draufsicht auf eine Giessform mit einer Anzahl von Hohlraeumen, die der Anzahl der Austragbohrungen der Giessmaschine entspricht, wobei die dargestellte Giessform mit der mehrteiligen Giessplatte fuer one shot Produkte von Fig. 8-15 einsetzbar ist.

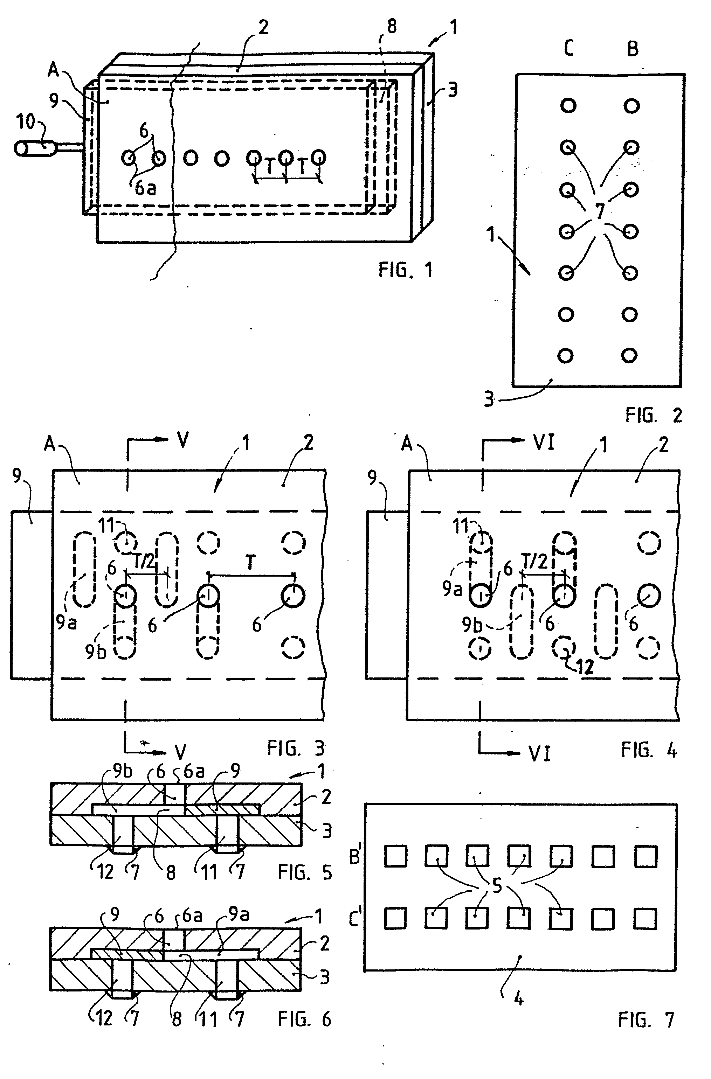

Bei den oben angefuehrten schematischen Figuren wurden verschiedene Mass-staebe verwendet, um somit die erfindungsgemaessen Merkmale besser darzustellen. Es wird zuerst auf die Fig. 1-7 Bezug genommen, die das Herstellungsprinzip einer erfindungsgemaessen Giessplatte fuer massive Produkte, d.h. bestehend lediglich aus dem Ausgangsmaterial, z. B. Schokolade darstellen.

0248232

Die mehrteilige Giessplatte wird mit 1 bezeichnet. Dieselbe besteht aus einer Oberplatte 2, die dem nicht dargestellten Giessmaschinenboden zuzuordnen ist, sowie aus einer Unterplatte 3, wobei unterhalb der Unterplatte 3 jeweils eine Giessform 4 (Fig. 7) ueber nicht dargestellte Zufuhrketten auf eine an sich bekannte und nicht weiter dargestellte Weise zugefuehrt wird. Die Pressformen 4 weisen eine Mehrzahl von Hohlraeumen 5 auf, deren Anzahl der Doppelzahl der Eingangskanaele 6 entspricht, deren Eingangsoeffnung 6a, als Giessplatte 1 der Giessmaschine zugeordnet ist, in Ueberdeckung mit einer Austragbohrung der Giessmaschine gelangt. Die Austragduesen der Giessplatte 1 sind mit 7 bezeichnet und entlang zwei gedachten Linien bzw. Reihen B und C mit der gleichen Anordnung wie fuer die Hohlraeume 5 vorgesehen, welchletztere ihrerseits entlang der beiden gedachten Linien bzw. Reihen C' und B' angeordnet sind.

Um die Anzahl der Austragduesen 7 in bezug auf die Anzahl der Eingangskanaele 6 zu verdoppeln, unter Einhaltung der erforderlichen Verteilgenauigkeit wird erfindungsgemaes in der Giessplatte 1 eine Verteilungskammer 8 vorgesehen, in der hin- und herbeweglich ein Schieber 9 aufgenommen, der, wie nachfolgend naeher angefuehrt, geschlitzt ist. Die Hin- und Herbewegung ist z. B. durch eine pneumatische Zylinder-Kolbeneinheit 10 (Fig. 1) erhalten, die auf eine nicht naeher dargestellte Weise von der Giessmaschine getragen ist. Wie insbesondere aus Fig. 3 – 6 ersichtlich, muendet jeder Eingangskanal 6 in die Verteilungskammer 8 ein, wobei in der letzteren fuer jeden Eingangskanal 6 jeweils zwei Ausgangsabzweigungen vorgesehen sind, und zwar eine erste Ausgangsabzweigung 11 und eine zweite Ausgangsabzweigung 12, die jeweils in einer Austragsduese 7 ausmuenden. Der geschlitzte Schieber 9 hat die Aufgabe, jeden Eingangskanal 6 mit der einen Ausgangsabzweigung zu verbinden und gleichzeitig die andere Ausgangsabzweigung zu sperren, bei Schieber 9 in der einen Schieberhubendstellung und beim Schieber 9 in der anderen Schieberhubendstellung versetzt, den Uebergang zu der vorher

gesperrten Ausgangsabzweigung zu öffnen und den Gang zu der vorher offenen Ausgangsabzweigung zu sperren. Dieses Giess-spiel ist aus den Figuren 5 und 6 ersichtlich und zu diesem Zweck weist der Schieber 9 fuer jeden Eingangskanal 6 zwei durchgehende Schlitze 9a und 9b auf, wie aus der Zeichnung ersichtlich. Mit T ist die Teilung der Eingangskanaele 6 bezeichnet. Die Schlitze 9a und 9b weisen die Gestaltung eines Knopfschlitzes bzw. Langlochs auf und dieselben besitzen eine im wesentlichen geradlinige Erstreckung. Die genannten Schlitze sind quer in bezug auf die Erstreckung des Schiebers 9, zueinander versetzt angeordnet, wobei die Teilung T/2 zwischen denselben der Haelfte der zwischen den Eingangskanaelen 6 vorgesehenen Teilung T entspricht. Bei dieser Anordnung und mit dem Schieber in der einen Schieberhubendstellung wird man fuer jeden Eingangskanal 6 sowie fuer die demselben zugeordneten Ausgangsabzweigungen 11 und 12 eine wie aus Fig. 5 ersichtliche Lage aufweisen, bei der eine Kontinuitaet zwischen dem Eingangskanal 6, dem Schlitz 9b und der zweiten Ausgangsabzweigung 12 vorliegt, wobei gleichzeitig der Schieberkoerper des Schiebers 9 die Verbindung zwischen dem Eingangskanal 6 und der ersten Ausgangsabzweigung 11 sperrt. In solcher Lage wird man deshalb eine Schokoladenaustragung ueber alle sich auf der gedachten Duesenlinie B befindlichen Austragduesen 7 haben. Bewegt man den Schieber 9 in seine andere Schieberhubendlage, so wird man eine Austragung ueber alle sich auf der gedachten Duesenlinie C befindlichen Austragduesen 7 haben. In der Tat, wie aus Fig. 4 und 6 ersichtlich, entfernt sich waehrend dieser Bewegung des Schiebers 9 der Schlitz 9b vom Eingangskanal 6 sowie von der zweiten Ausgangsabzweigung 12, wogegen der Schlitz 9a in Ueberdeckung einerseits mit der Eingangsoeffnung des Eingangskanals 6 und andererseits mit der Eingangsoeffnung der ersten Ausgangsabzweigung 11 gelangt. Die Schokoladenaustragung wird somit entlang der Strecke erfolgen, die durch den Eingangskanal 6, den Schlitz 9a und die erste Ausgangsabzweigung 11 gebildet ist. Schiebt man den Schieber wieder in seine andere Schieberendlage, so kehrt man in die durch die Figuren 3 und 5 dargestellte Lage zurueck, bei welcher eine Schokoladenaustragung ueber die sich in der Linie B befindlichen Austragduesen erfolgt.

Gemaess dieser Ausfuehrungsform wird deshalb die Schokolade nicht geteilt, indem dieselbe durch eine mit stets offenen Ausgangsabzweigungen gefuehrt wird, in welchem Falle die im Einleitungsteil angefuehrten Nachteile entstehen wuerden, sondern man erreicht die Zufuehrung einer vom Kolben genau vorbestimmten Schokoladenmenge in einer bestimmten eigenen Strecke, wofuer die ausgetragene Schokoladenmenge vollstaendig auf eine tadellose Weise in den jeweiligen Hohlraum 5 gelangt. Bei einem Kolbenhub werden deshalb die sich auf der einen Linie befindlichen Hohlraeume 5 und bei dem nachfolgenden Kolbenhub werden die sich auf der anderen Linie befindlichen Hohlraeume 5 abwechselnd gefuellt. Aufgrund der aeusserst kurzen Zeiten eines Austraghubs eines Drehkolbens sowie der aeusserst kurzen Zeit fuer die Bewegung des Schiebers 9 koennen die Austragsspiele bei einer aeusserst hohen Geschwindigkeit insbesondere bei Giessmaschinen mit Drehkolben durchgefuehrt werden.

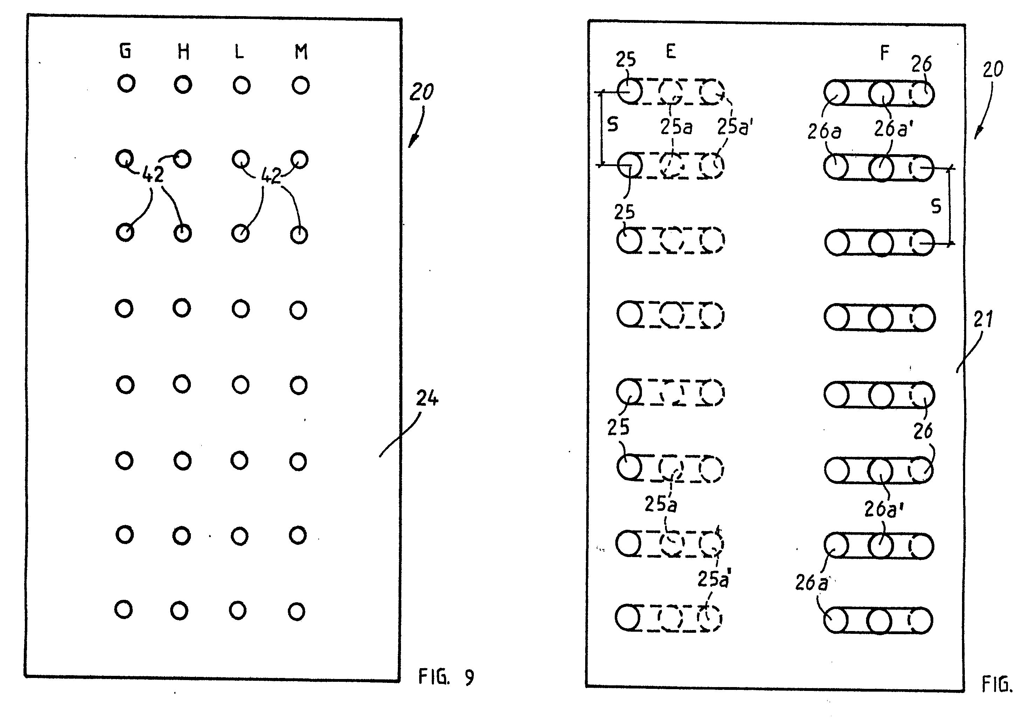

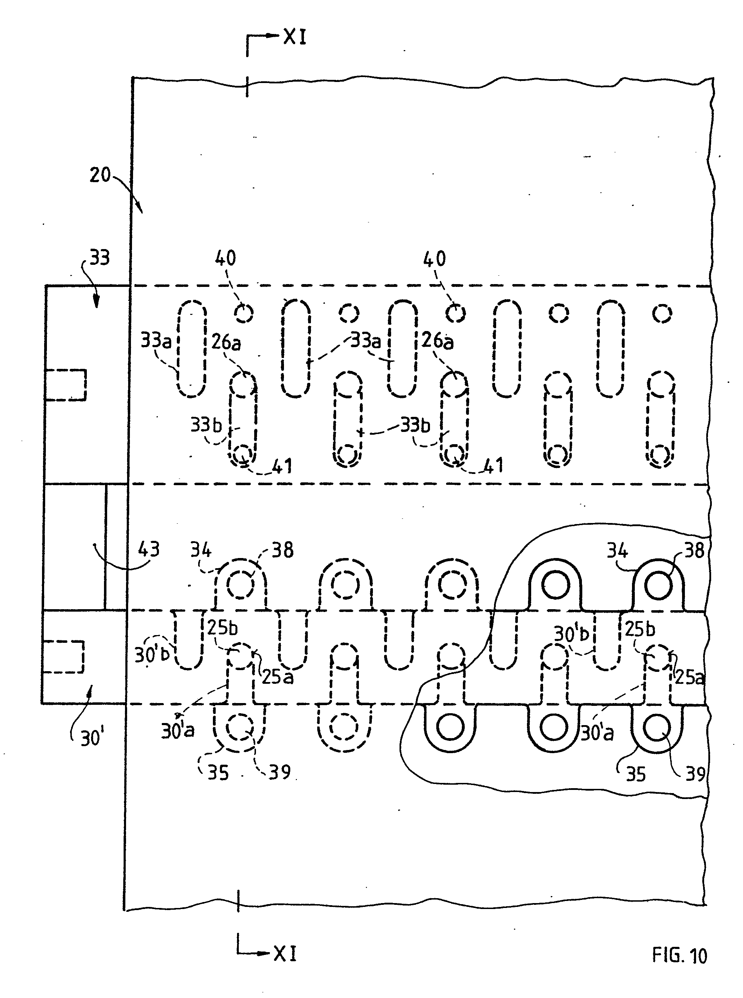

Es wird nun auf die Ausfuehrung von Fig. 8 - 16 Bezug genommen, die eine erfindungsgemaesse mehrteilige Giessplatte fuer gefuellte Schokoladenprodukte, die mit dem bekannten One-Shot-Verfahren herstellbar sind, darstellt.

Die erfindungsgemaesse mehrteilige Giessplatte ist mit 20 bezeichnet. Im dargestellten Beispiel ist die Giessplatte durch eine Oberplatte 21, eine Mittelplatte 22, eine Einsatzplatte 23 und eine Unterplatte 24 gebildet. Auf der Oberplatte 21 sind zwei Reihen E und F von Eingangskanaelen 25, 26 vorgesehen, deren beide Ausgangsoeffnungen 25a, 25a' und 26a, 26a', bei Giessplatte 20 zur Giessmaschine zugeordnet, in Ueberdeckung die ersteren, 25a, 25a', mit den nicht dargestellten Schokoladenaustragoeffnungen der Giessmaschine und die letzteren, 26a, 26a', mit den ebenfalls nicht dargestellten Fuellungsaustragsoeffnungen der Giessmaschine sind. Wie an und fuer sich bekannt, werden die Schokolade und das Fuellungsmaterial von zwei in der nicht dargestellten Giessmaschine fuer One-Shot-Produkte vorgesehenen Kolbengruppen ausgetragen, deren Kolben entweder hin- und hergehend oder rotierbar sind. Um bei der Giessplatte 20 eine Anzahl von Austragduesen zu erhalten, die der Anzahl von jeweils vorgesehenen Kolben entspricht, wird erfindungsgemaess auch bei dieser Ausfuehrungsform das erfindungsgemaesse Schieberprinzip eingesetzt. Dadurch, dass in jeden Hohlraum 27 der Giessformen 28 sowohl Umhuellungsmaterial (Schokolade) als auch Fuellungsmaterial (Creme, Likoer usw.) einzufuehren ist, ist der Schieber durch eine Anzahl von einzelnen Schiebern gebildet, die somit einen wie nachfolgend beschriebenen Mehrfach- bzw. Kaefigschieber bilden.

Es wird z. B. eine Giessmaschine mit 32 Kolben in Betracht gezogen, und zwar mit 16 Kolben fuer die Schokolade und 16 Kolben fuer die Fuellung. Die 16 Austragsbohrungen fuer die Schokolade muenden in Eingangskanaele 25 ein, die auf der gedachten Linie E mit Teilung S angeordnet sind. Die 16 Austragsbohrungen fuer die Fuellung muenden in die Eingangskanaele 26 ein, die sich auf der gedachten Linie F befinden und ebenfalls dieselbe Teilung S aufweisen. Aus Platzgruenden muenden im dargestellten Beispiel die Eingangskanaele 25 mit den Ausgangsoeffnungen 25a und 25a' abwechselnd in eine Verteilungskammer 29 die ersteren und in eine Verteilungskammer 29' die zweiten ueber in der Einsatzplatte 23 vorgesehene Durchgangsoeffnungen 25b und 25b' ein. Wie nachfolgend naeher beschrieben, sind in den Verteilungskammern 29 und 29' jeweils ein einzelner geschlitzter Schieber 30 und 30'.

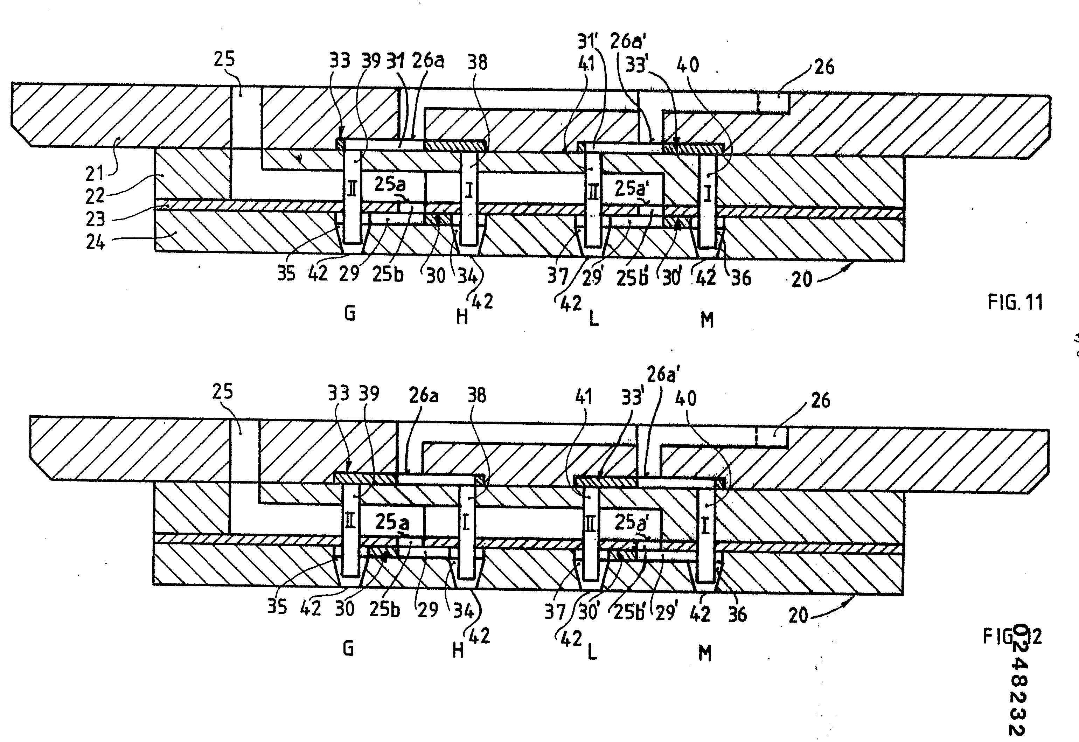

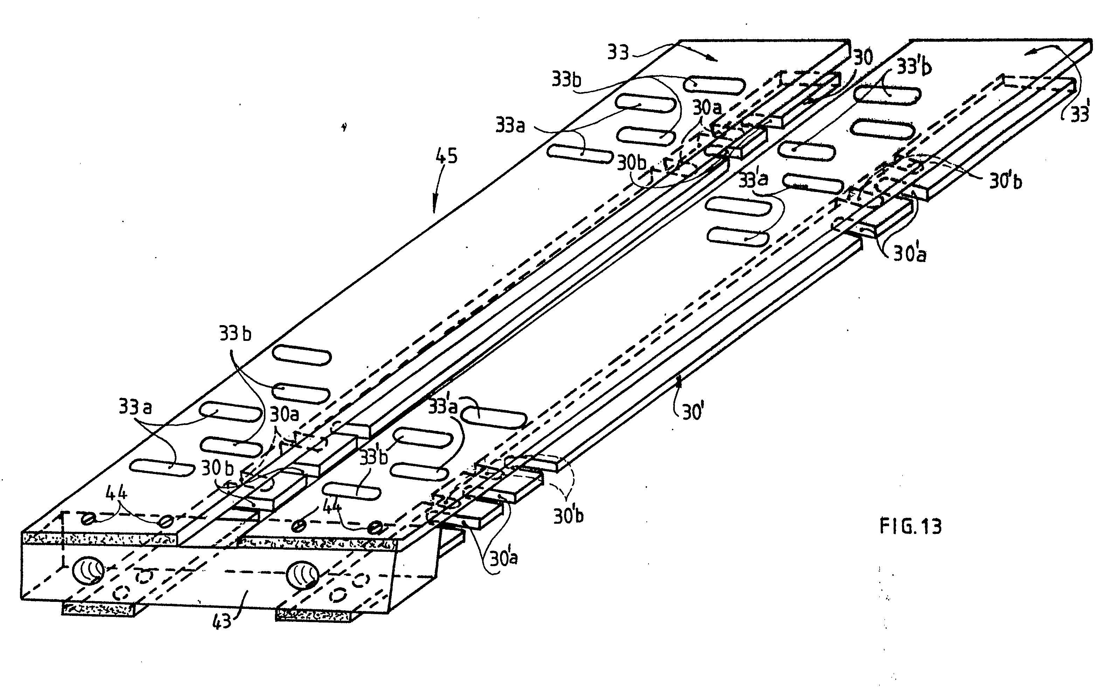

Die Eingangskanaele 26 muenden ihrerseits mit der Eingangsoeffnung 26a, 26a' fuer die Fuellung ebenfalls abwechselnd in eine Verteilungskammer 31, 31', wobei in den genannten Verteilungskammern 31, 31' ein in der Folge naeher beschriebener geschlitzter Schieber 33, 33' aufgenommen ist. Die erste und die zweite Ausgangsabzweigung jeder Verteilungskammer 29, 29' und 31, 31' sind mit 34, 35; 36, 37; 38, 39 und 40, 41 bezeichnet. Wie aus der Zeichnung, und insbesondere aus Fig. 11 und 12 ersichtlich, muenden jeweils ein Kanal fuer die Schokolade und ein Kanal fuer die Fuellung konzentrisch in eine Austragsduese bzw. -oeffnung 42 ein.

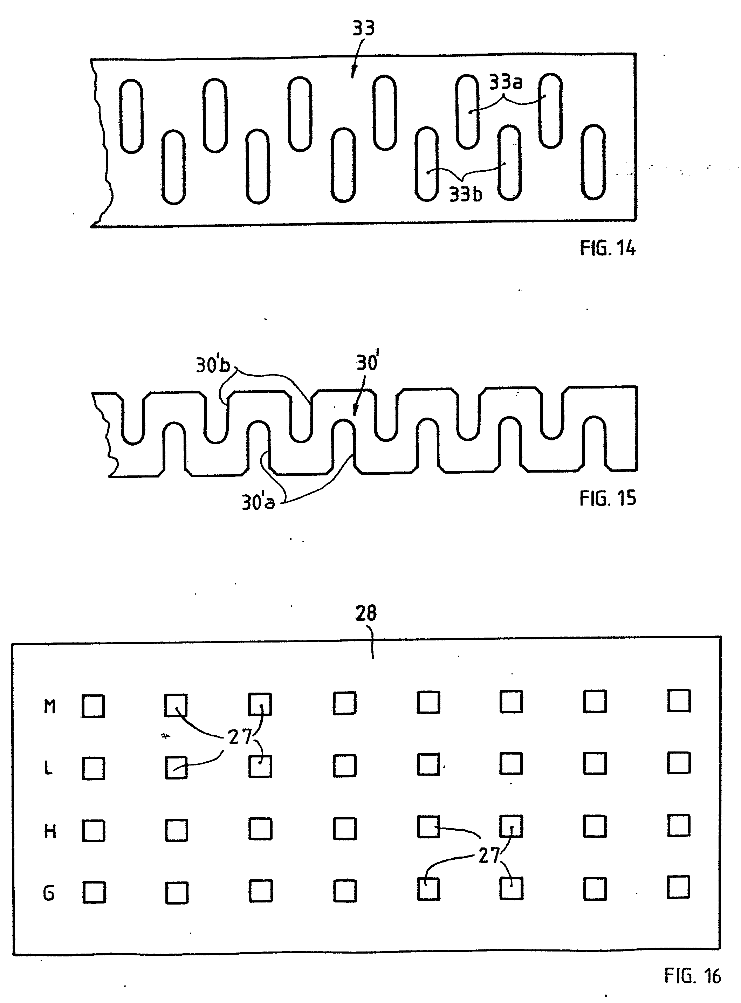

Die einzelnen Schieber 30, 30' und 33, 33' weisen jeweils die gleiche Gestaltung, d. h. die gleichen Schlitze auf, wie insbesondere aus Fig. 14 und 15 ersichtlich. In bezug auf die Schieber 33 und 33' wird genauer angefuehrt, dass dieselben eine aehnliche Gestaltung wie die in bezug auf die Ausfuehrungsform von Fig. 1 - 7 beschriebene Schiebergestaltung aufweisen, wobei die Schlitze mit 33a, 33'a und 33b, 33'b bezeichnet sind. Die Schieber 30, 30' weisen Schlitze 30a, 30'a und 30b, 30'b auf, die alternierend auf eine Schieberlaengsseite der Schieber 30, 30' offen sind.

Im dargestellten Beispiel sind die einzelnen Schieber 30, 30', 33 und 33' auf deren Antriebsstirnseite mittels eines Querbalkens 43 und Schrauben 44 miteinander verbunden, wobei der Querbalken mit eine Hin- und Herbewegung ausfuehrenden nicht naeher dargestellten und z. B wie in Fig. 1 eine Kolben-Zylinder-Einheit 10 enthaltenden Steuermitteln befestigt ist.

Durch den Kolbenhub wird waehrend des Betriebs die Fuellung von zwei Reihen von Hohlraeumen 27, z. B. der Hohlraeume auf den gedachten Linien G und L (wie aus Fig. 16 ersichtlich) mit Kaefigschieber 45 in einer seiner beiden Schieberhubendlagen und, bei Kaefigschieber in seiner anderen Schieberhubendlage wird der Giessvorgang in den Hohlraeumen 27 erfolgen, die sich auf den zwei weiteren gedachten Linien H und M angeordnet sind. Gemaess Fig. 11 werden bei der dort dargestellten Schieberhubendstellung des Kaefigschiebers 45 die Schlitze 33b und 33'b der Schieber 33 und 33' die Eingangskanaele 26 mit den zweiten Ausgangskanaelen 39, 41 fuer die Fuellung in Verbindung setzen, wogegen die Schlitze 30b und 30'b der unteren Schieber 30, 30' die Eingangskanaele 25 mit den zweiten Ausgangskanaelen 35, 37 fuer die Schokolade in Verbindung setzen werden. In dieser Schieberhubendstellung des Kaefigschiebers 45 sperren die vollen Teile bzw. Schieberkoerper der Schieber 33, 33' und 30, 30' die Streckenkontinuitaet der zugeordneten Eingangskanaele, wodurch keine Produktaustragung in den entlang der Reihen H und M vorgesehenen Austragduesen erfolgen wird.

Gelangt nun der Kaefigschieber 45 in seine andere Schieberendhubstellung, so wird eine Sperrung der vorher aktiven Austragsstrecken bewirkt und gleichzeitig werden die Schlitze 33a, 33a' und 30a, 30a' die Eingangskanaele 26 mit den dazugehoerigen ersten Ausgangskanaelen 40, 38 in Verbindung setzen, wogegen die Schlitze 30a, 30a' die Eingangskanaele 25 mit den demselben zugeordneten ersten Ausgangskanaelen 36, 34 in Verbindung setzen, wodurch eine Produktaustragung aus den auf den gedachten Linien H und M vorgesehenen Austragduesen 42 bewirkt wird.

Auch bei dieser Ausfuehrungsform wird die Austragung der Schokolade sowie der Fuellung entlang einer eigenen wohlbestimmten Strecke und nicht einfach entlang einer Strecke mit offene Oeffnungen aufweisenden Abzweigungen, wodurch die Dosierung tadellos ist. Wie insbesondere aus Fig. 11 und 12 ersichtlich, ermoeglicht die Einsetzung der Einsatzplatte 23 die Erhaltung einer symmetrischen Anordnung der Durchgangsoeffnungen 25b, 25b' der Eingangskanaele 25, sowie eine Vereinfachung bei der Herstellung der Einsatzplatte selbst, weil die Verwendung desselben die Durchfuehrung von Unterschnittbearbeitungen zur Erhaltung der Verteilungskammern 29, 29' vermeidet.

Dem Obengesagten ist entnehmbar, dass es mit den erfindungsgemaessen mehrteiligen Giessplatten mit Schiebern moeglich ist, die der vorliegenden Erfindung zugrunde liegende Aufgabe wirksam zu loesen und die im Einleitungsteil erwaehnten Vorteile zu erzielen. Insbesondere wird es moeglich, ein einwandfreies Gewicht aufweisende Produkte bzw. Pralinen herzustellen, d. h. sehr enge Gewichtsherstellungstoleranzen einzuhalten, was indirekterweise ebenfalls ermoeglicht, das sonst verbrauchte Material (Schokolade, Creme, Likoer usw.), das bisher hinzudosiert wurde, vollkommen zu sparen, und mit Sicherheit zu vermeiden unterhalb der verlangten Gewichtstoleranzen zu gelangen.

Darueber hinaus ist es ferner vorteilhafterweise moeglich, bei den erfindungsgemaessen Giessformen eine Zahl von Hohlraeumen zu erzielen, welche Hohlraumzahl der Anzahl der Giessmaschinenkolben bei One-Shot-Produkten entspricht. Die Leistung der Giessmaschine wird dabei erheblich erhoeht, insbesondere, wenn man Giessmaschinen mit drehbaren Kolben einsetzt.

Die Anbringung der erfindungsgemaessen mehrteiligen Giessplatten erfordert keine besondere Anpassungsarbeit, wobei die erfindungsgemaessen Giessplatten ohne weiteres ebenfalls mit den schon bestehenden Giessmaschinen verwendbar sind. Die Anbringung der eine hin- und hergehende Bewegung bestimmenden Steuermittel ist auf eine einfache Weise und ohne besondere Anpassungen durchfuehrbar.

In der Praxis ist es ohne weiteres moeglich, Aenderungen und Abwandlungen bezueglich der Gestaltung der Schieber, sowie der Durchfuehrung der Schlitze und der Eingangskanaele, sowie auch der Ausgangskanaele durchzufuehren, ohne dadurch den Schutzumfang vorliegender Erfindung zu verlassen.

Es waere z. B. auch moeglich, einen Schieber vorzusehen, der statt jeweils einen Schritt in die eine und die andere Richtung durchzufuehren, zwei oder mehrere Schritte in der gleichen Bewegungsrichtung durchfuehrt, wobei am Hubende jedes Schrittes ein Giessvorgang erfolgt. In einem solchen Falle sollte der Schieber fuer jede Giessmaschinenaustragbohrung eine entsprechende Anzahl von Schlitzen aufweisen, und zwar eine Schlitzzahl, die der fuer jeden Eingangskanal vorgesehene Zahl von Ausgangskanaelen entspricht. Auch die Anzahl der Verteilkammern, d. h. der Schieber, kann sowohl im Falle von vollen Produkten als auch im Falle von eine Fuellung aufweisenden Produkten frei gewaehlt werden, ohne dadurch ebenfalls den Schutzumfang vorliegender Erfindung zu verlassen.

Alle der Beschreibung, den Anspruechen und den Zeichnungen entnehmbaren Merkmale sind sowohl einzeln als auch in beliebiger Kombination zueinander als erfindungswesentlich zu betrachten.

0248232

16

Bezugszeichenliste

1   mehrteilige Giessplatte
2   Oberplatte
3   Unterplatte
4   Giessform
5   Hohlraum
6   Eingangskanal
6a  Eingangsoeffnung
7   Austragduese
8   Verteilungskammer
9   geschlitzter Schieber
9a  Schlitz
9b  Schlitz
10  Zylinder-Kolben-Einheit
11  erste Ausgangsabzweigung
12  zweite Ausgangsabzweigung
A   Detail
B   gedachte Linie, Reihe
C   gedachte Linie, Reihe
B'  gedachte Linie, Reihe
C'  gedachte Linie, Reihe
T   Teilung
T/2 Teilung

20  mehrteilige Giessplatte
21  Oberplatte
22  Mittelplatte
23  Einsatzplatte
24  Unterplatte
25  Eingangskanal
25a  Einmuendungsoeffnung
25a'  Einmuendungsoeffnung
25b  Durchgangsoeffnung
25b'  Durchgangsoeffnung

0248232

26 Eingangskanal

26a Einmuendungsoeffnung

26a' Einmuendungsoeffnung

27 Hohlraum

28 Giessform

29 Verteilungskammer

29' Verteilungskammer

30 geschlitzter Schieber

30a Schlitz

30b Schlitz

30' geschlitzter Schieber

30'a Schlitz

30'b Schlitz

31 Verteilungskammer

31' Verteilungskammer

32

32'

33 geschlitzter Schieber

33a Schlitz

33b Schlitz

33' geschlitzter Schieber 33'a Schlitz

33'b Schlitz

34 erste Ausgangsabzweigung

35 zweite Ausgangsabzweigung

36 erste Ausgangsabzweigung

37 zweite Ausgangsabzweigung

38 erste Ausgangsabzweigung

39 zweite Ausgangsabzweigung

40 erste Ausgangsabzweigung

41 zweite Ausgangsabzweigung

42 Austragduese

43 Querbalken

44 Schrauben

E gedachte Linie, Reihe

18

F  gedachte Linie, Reihe
G  gedachte Linie, Reihe
H  gedachte Linie, Reihe
L  gedachte Linie, Reihe
M  gedachte Linie, Reihe
S  Teilung

Patentansprueche

1. Mehrteilige Giessplatte fuer Schokoladenprodukte, enthaltend Abschnitte von Schokoladenleitstrecken, dadurch gekennzeichnet, dass

i. fuer jede Austragbohrung der Giessmaschine in der Giessplatte ein Eingangskanal (6) vorgesehen ist, der in eine gemeinsame Verteilungskammer (8) einmuendet, von der fuer jeden Eingangskanal (6) eine erste (11) und eine zweite (12) Ausgangsabzweigung ausgehen, die jeweils in eine Austragduese (7) zum Giessen der zu giessenden Schokolade o. dgl. in einen Hohlraum (5) der Giessform (4) einmuenden,

ii. in der Verteilungskammer (8) ein hin- und hergehender Verteilungsschieber (9) aufgenommen ist, der fuer jeden Eingangskanal (6) zwei Schlitze (9a, 9b) aufweist, die derart gestaltet und angeordnet sind, dass, bei Schieber (9) in der einen Schieberhubendstellung, ein erster Schieberschlitz (9a) sich in Verbindungsstellung befindet, und die Verbindung eines Eingangskanals (6) mit der ersten Ausgangsabzweigung (11) bewirk·, waehrend der Schieberkoerper die Trennung zwischen dem genannten Eingangskanal (6) und der zweiten Ausgangsabzweigung (12) desselben bewirkt und der zweite Schieberschlitz (9b) sich in einer Nicht-Verbindungsstellung befindet und, bei Schieber (9) in der anderen Schieberhubendstellung, der genannte erste Schieberschlitz (9a) sich in einer Nicht-Verbindungsstellung befindet und der Schieberkoerper die Trennung zwischen dem genannten Eingangskanal (6) mit der ersten Ausgangsabzweigung (11) bewirkt, waehrend der zweite Schieberschlitz (9b) nun die Verbindung zwischen dem genannten Eingangskanal (6) und der zweiten Ausgangsabzweigung (12) desselben bewirkt, wodurch die Produktaustragung abwechselnd von der ersten (11) und zweiten (12) Ausgangsabzweigung bei jedem Kolbenhub des einen dem genannten Eingangskanal (6) zugeordneten Giessmaschinenkolbens erfolgt, und

iii. die hin- und hergehende Bewegung des Verteilungsschiebers

(9) bewirkende Steuermittel (10) vorgesehen sind.

2. Mehrteilige Giessplatte nach Anspruch 1, dadurch gekennzeichnet, dass die Verteilungskammer (8) fuer alle Eingangskanaele (6) bzw. die jeweiligen ersten (11) und zweiten (12) Ausgangsabzweigungen derselben durchgehend ausgefuehrt ist und in der Verteilungskammer (8) die Eingangskanaele (6) entlang der Giessplattenmitellinie mit einer Teilung (T) angeordnet sind und seitlich in bezug auf die genannte Mitellinie fuer jeden Eingangskanal (6) auf eine in bezug auf die genannte Mittellinie senkrechte und durch den Mittelpunkt der Ausgangsoeffnung des Eingangskanals (6) hindurchgehende Geradlinie eine Durchgangsoeffnung fuer die genannte erste Ausgangsabzweigung (11) und eine Durchgangsoeffnung fuer die genannte zweite Ausgangsabzweigung (12) ausgearbeitet sind.

3. Mehrteilige Giessplatte nach Anspruch 1 und 2, dadurch gekennzeichnet, dass der Verteilungsschieber (9) als Leiste ausgefuehrt ist, in der die jeweiligen zwei fuer jeden Eingangskanal (6) vorgesehenen Schlitze (9a, 9b) sich in bezug auf die Laengsrichtung des Schiebers (9) in Querrichtung desselben erstrecken, parallel und gegenueberliegend in bezug auf die Laengsrichtung des Schiebers (9) sowie voneinander mit der Teilungshaelfte (T/2) angeordnet sind, wobei die Gestaltung der genannten Schlitze (9a, 9b) derart ist, dass die genannten Schlitze (9a, 9b) die mittlere Einlassoeffnung des jeweiligen Eingangskanals (6) mit der zugeordneten Eingangsoeffnung der ersten Ausgangsabzweigung (11) bei Schieber (9) in der einen Schieberhubendstellung und mit der zugeordneten Eingangsoeffnung der zweiten Ausgangsabzweigung (12) bei Schieber (9) in der anderen Schieberhubendstellung verbindet.

4. Mehrteilige Giessplatte nach Anspruch 1, dadurch gekennzeichnet, dass die Verteilungskammer (8) in einer Einzelplatte (2) ausgearbeitet ist und den die Eingangsoeffnung der genannten ersten (11) und zweiten (12) Ausgangsabzweigung aufweisenden Kammerboden durch die Oberseite der darunterstehenden Einzelplatte (3) gebildet ist.

5. Mehrteilige Giessplatte nach einem oder mehreren der Ansprueche 1 - 4, dadurch gekennzeichnet, dass mehrere Verteilungskammern (29, 31; 29, 29', 31, 31') und Verteilungsschieber (30, 33; 30', 33') vorgesehen sind.

6. Mehrteilige Giessplatte nach Anspruch 5, dadurch gekennzeichnet, dass die Schieber (30, 30', 33, 33') bzw. die dieselben aufnehmenden Verteilungskammern (29, 29', 31, 31') im wesentlichen in der gleichen Horizontalebene bzw. horizontal und parallel uebereinander angeordnet sind, wobei die Schieber (30, 30', 33, 33') an ihrer Antriebsstirnseite mittels eines mit den Steuermitteln (10) verbundenen Querbalkens (43) miteinander verbunden sind.

7. Mehrteilige Giessplatte nach einem oder mehreren der Ansprueche 1 - 6, dadurch gekennzeichnet, dass die Steuermittel zur Bewirkung der hin- und hergehenden Bewegung des Schiebers (9; 30, 30', 33, 33') aus einer Zylinder-Kolben-Einheit (10) bestehen, wobei diese Zylinder-Kolben-Einheit (10) mit der Giessmaschine befestigt ist, waehrend das freie Ende der Kolbenstange, z. B. mittels eines Gewindeabschnittes mit dem Schieber (9) bzw. dem die vorgesehenen Schieber (30, 30', 33, 33') miteinander verbindenden Querbalken (43) verbunden ist.

8. Mehrteilige Giessplatte fuer Giessformen zur Herstellung von gefuellten bzw. one shot Schokoladenprodukten, nach einem oder mehreren der vorhergehenden Ansprueche, enthaltend eine Mehrzahl von uebereinander angeordneten Einzelplatten, die Abschnitten von Schokoladenleitstrecken und Fuellungsleitstrecken aufweisen, dadurch gekennzeichnet, dass
i. fuer jede Schokoladenaustragbohrung und fuer jede Fuellungsaustragbohrung der beiden Kolbengruppen der Giessmaschine in der Giessplatte (20) ein Schokoladeneingangskanal (25), der in eine gemeinsame Schokoladenverteilungskammer (29) fuer die die Schokolade leitenden Kanaele (34, 35) sowie einen Fuellungseingangskanal (26), der in eine gemeinsame Fuellungsverteilungskammer (31) fuer die die Fuellung leitenden Kanaele (38, 39) vorgesehen sind, wobei die beiden genannten Verteilungskammer (29, 31) uebereinander angeordnet sind und von denselben fuer jeden Schokoladeneingangskanal (25) und fuer jeden Fuellungseingangskanal (26) jeweils eine erste (34, 38) und eine zweite (35, 39) Ausgangsabzweigung ausgehen, die in bezug auf den jeweiligen Schokoladeneingangskanal (25) bzw. Fuellungseingangskanal (26) symmetrisch gleich entfernt sind, wodurch die erste Ausgangsabzweigung (34) der Schokoladenverteilungskammer (29) und die erste Ausgangsabzweigung (38) der Fuellungsverteilungskammer (31) im wesentlichen zueinander koaxial sind und in eine und dieselbe Austragduese (42) der Giessplatte (20) konzentrisch einmuenden und ebenfalls die zweite Ausgangsabzweigung (35) der Schokoladenverteilungskammer (29) und die zweite Ausgangsabzweigung (39) der Fuellungsverteilungskammer (31) im wesentlichen zueinander koaxial sind und in eine und dieselbe Austragduese (42) der Giessplatte (20) konzentrisch einmuenden, und

ii. in der Schokoladenverteilungskammer (29) ein eigener Schokoladenverteilungsschieber (30) und in der Fuellungsverteilungskammer (31) ein eigener Fuellungsverteilungsschieber (33) hin- und herbeweglich aufgenommen sind, die fuer jeden Schokoladeneingangskanal (25) bzw. fuer jeden Fuellungseingangskanal (26) zwei Schlitze (30a, 30b, 33a, 33b) aufweisen, die derart gestaltet und angeordnet sind, dass bei Schokoladen- bzw. Fuellungsverteilungsschieber (30 bzw. 33) in der einen Schieberhubendstellung (Fig. 12) ein erster Schlitz (30b, 33b) der genannten Schieber (30, 33) sich in Verbindungsstellung befindet und bewirkt, fuer die Schokolade, die Verbindung eines Schokoladeneingangskanals (25) mit der ersten Schokoladenausgangsabzweigung (34) waehrend der Schieberkoerper des Schiebers (30) die Trennung zwischen dem genannten Schokoladeneingangskanal (25) und der zweiten Schokoladenausgangsabzweigung (35) bestimmt, wobei der zweite Schlitz (30a) sich in einer Nicht-Verbindungsstellung befindet, und, fuer die Fuellung, die Verbindung eines Fuellungseingangskanals (26) mit der ersten Fuellungsausgangsabzweigung (38) waehrend der Schieberkoerper des Schiebers (33) die Trennung zwischen dem genannten Fuellungseingangskanal (26) und der zweiten Fuellungsausgangsabzweigung (39) bestimmt, wobei der zweite Schlitz (33a) sich in einer Nicht-Verbindungsstellung befindet, und bei Schokoladen- bzw. Fuellungsschieber (30 bzw. 33) in der anderen Schieberhubendstellung (Fig. 11), der zweite Schlitz (30a, 33a) der genannten Schieber (30, 33) sich in Verbindungsstellung befindet und bewirkt, fuer die Schokolade, die Verbindung des genannten Schokoladeneingangskanals (25) mit der zweiten Schokoladenausgangsabzweigung (35) waehrend den Schieberkoerper des Schiebers (30) die Trennung zwischen dem genannten Schokoladeneingangskanals (25) und der ersten Schokoladenausgangsabzweigung (34) bestimmt, wobei der erste Schlitz (30b) sich in Nicht-Verbindungsstellung befindet und, fuer die Fuellung, die Verbindung des genannten Fuellungseingangskanals (26) mit der zweiten Fuellungsausgangsabzweigung (39) waehrend der Schieberkoerper des Schiebers (33) die Trennung zwischen dem genannten Fuellungseingangskanal (26) und der ersten Fuellungsausgangsabzweigung (38) bewirkt, wobei der erste Schlitz (33b) sich in einer Nicht-Verbindungsstellung befindet, wodurch die Schokoladen- und Fuellungsaustragung abwechselnd von den der ersten (34 bzw. 38) und der zweiten (35 bzw. 39) Schokoladen- bzw. Fuellungsausgangsabzweigung zugeordneten Austragduesen (42) der Giessplatte (20) erfolgt,

iii. an ihrer Antriebsstirnseite sind der Schokoladenverteilungsschieber (30) und der Fuellungsverteilungsschieber (33) ueber einen Querbalken (43) steif miteinander verbunden, der seinerseits mit den die Hin- und Herbewegung des somit gebildeten mehrteiligen Schiebers (45) bewirkenden Steuermitteln (10) verbunden ist.

9. Mehrteilige Giessplatte nach Anspruch 8, dadurch gekennzeichnet, dass fuer die Schokolade bzw. die Fuellung in der Giessplatte (20) zwei Schokoladenverteilungskammern (29, 29') sowie zwei Fuellungsverteilungskammern (31, 31') mit dazugehoerigen Schokoladen- bzw. Fuellungsverteilungsschiebern (30, 30' bzw. 33, 33') vorgesehen sind, wobei jede Fuellungsverteilungskammer (31, 31') und jede Schokoladenverteilungskammer (29, 29') jeweils uebereinander in einer Abdeckungslage angeordnet und die beiden Fuellungsverteilungskammern (31, 31') sowie die beiden Schokoladenverteilungskammern (28, 28') im wesentlichen in einer jeweiligen Horizontalebene vorgesehen sind, und dass in eine Fuellungsverteilungskammer (31) die Fuellungseingangskanaele (26) mit gerader Zahl bzw. Stellung und in die andere Fuellungsverteilungskammer (31') die Fuellungseingangskanaele (26) mit ungerader Zahl bzw. Stellung in der Reihe von Austragbohrungen der Giessmaschinenkolben einmuenden, waehrend in die eine Schokoladenverteilungskammer (29) die Schokoladeneingangskanaele (25) mit grader Zahl bzw. Stellung und in die andere Schokoladenverteilungskammer (29') die Schokoladeneingangskanaele (25) mit ungerader Zahl bzw. Stellung in der Reihe von Austragbohrungen der Giessmaschinenkolben einmuenden.

10. Mehrteilige Giessplatte nach Anspruch 8 und 9, dadurch gekennzeichnet, dass in den uebereinander angeordneten Fuellungsverteilungskammern (31 bzw. 31') und den Schokoladenverteilungskammern (29 bzw. 29') die Einmuendungsoeffnung (26a, 26a' und 25a, 25a') der Fuellungs- und Schokoladeneingangskanaele (26, 25) mit Teilung S auf der Kammermittellinie verteilt sind, wobei seitlich dieser Mittellinie fuer jede genannte Einmuendungsöffnung (26a, 26a' und 25a, 25a') auf einer in bezug auf die genannte Mittellinie senkrechten und durch den Mittelpunkt der genannten Einmuendungsoeffnungen (26a, 26a' und 25a, 25a') hindurchgehenden gedachten Linie jeweils eine Eingangsoeffnung der vorgesehenen ersten bzw. zweiten Fuellungs- und Schokoladenausgangsabzweigungen (38, 39, 40, 41 bzw. 34, 35, 36, 37) angeordnet sind.

11. Mehrteilige Giessplatte nach Anspruch 8 und 9, dadurch gekennzeichnet, dass die Schokolade- bzw. Fuellungsverteilungsschieber (30, 30' bzw. 33, 33') als Leisten ausgefuehrt sind, in welchen die jeweiligen zwei fuer jeden Schokoladen- bzw. Fuellungseingangskanal (25 bzw. 26) vorgesehenen Schlitze (30a, 30b; 30'a, 30'b; 33a, 33b; 33'a, 33'b) sich in bezug auf die Schieberlaengsrichtung in Querrichtung erstrecken, parallel und gegenueberliegend in bezug auf die Laengsrichtung des Schiebers (30, 30'; 33, 33') sowie voneinander mit der Teilung T/2 angeordnet sind, die der Haelfte der Teilung T zwischen zwei nebeneinanderliegenden Schokoladen- bzw. Fuellungseingangska- naelen (25 bzw. 26) entspricht und wobei die Laenge der genannten Schlitze (30a, 30b; 30'a, 30'b; 33a, 33b; 33'a, 33'b) derart ist, dass die Verbindung zwischen der Ausgangsoeffnung des genannten Schokoladen- bzw. Fuellungseingangskanals (25 bzw. 26) und der zugeordneten Ausgangsoeffnung der ersten (38, 40) und zweiten (39, 41) Schokoladen- bzw. Fuellungsausgangsabzweigung bewirkt wird.

12. Mehrteilige Giessplatte nach Anspruch 8 und 9, dadurch gekennzeichnet, dass die oberen Verteilungskammern (31, 31') in der Oberplatte (21) ausgearbeitet sind und der die Eingangsoeffnungen der jeweiligen ersten und zweiten Ausgangsabzweigungen (38, 40; 39, 41) aufweisende Boden dieser Verteilungskammern (31, 31') von der Oberseite der Mittelplatte (22) gebildet ist, waehrend die unteren Verteilungskammern (29, 29') in der Unterplatte (24) ausgearbeitet sind und der Oberseite dieser Verteilungskammern (29, 29') von einer Einsatzplatte (23) gebildet ist, die die Eingangskanaele (25) mit den genannten Verteilungskammern (29, 29') verbindenden Durchgangsoeffnungen (25b, 25b') aufweist.

13. Mehrteilige Giessplatte nach Anspruch 8 und 9, dadurch gekennzeichnet, dass die einzelnen Schieber (30, 30'; 33, 33') an ihrer Antriebsstirnseite durch einen Querbalken (43) miteinander verbunden sind und somit einen mehrfachen Kaefigschieber (45) bilden, der mit diesem Querbalken (43) mit einer bzw. vorzugsweise zwei zylinder-kolben-artigen Steuereinheiten (10) verbunden ist, die dem Schieber (45) eine hin- und hergehende Steuerbewegung verleiht/verleihen.

14. Mehrteilige Giessplatte nach Anspruch 8 und 9, dadurch gekennzeichnet, dass die genannte erste (38, 40) und zwite (39, 41) Ausgangsabzweigung der oberen Kammern bzw. der Fuellungsverteilungskammern (31, 31') als Rohre ausgefuehrt sind, die konzentrisch als innere Rohre in die erste (34, 36) und zweite (35, 37) Ausgangsabzweigung der Schokoladenkammern bzw. unteren Kammern (29, 29') einmuenden.

15. Mehrteilige Giessplatte nach Anspruch 8 und 9, dadurch gekennzeichnet, dass die genannten ersten (34, 36) und zweiten (35, 37) Ausgangsabzweigungen der unteren Verteilungskammern bzw. der Schokoladenkammern (29, 29') als Austragduesen (42) ausgefuehrt sind.

16. Mehrteilige Giessplatte nach Anspruch 8 und 9, dadurch gekennzeichnet, dass die in den oberen Schiebern bzw. in den Fuellungsverteilungsschiebern (33, 33') vorgesehenen Schlitze (33a, 33b; 33'a, 33'b) die Gestaltung eines Langlochs aufweisen.

17. Mehrteilige Giessplatte nach Anspruch 8 und 9, dadurch gekennzeichnet, dass die in den unteren Schiebern bzw. in den Schokoladenverteilungsschiebern (30, 30') vorgesehenen Schlitze als Langsloecher vorgesehen sind, die im Bereich der benachbarten Laengskante des Schiebers (30, 30') ein offenes Ende aufweisen.

18. Mehrteilige Giessplatte nach Anspruch 8 und 9, dadurch gekennzeichnet, dass die zwischen der Mittelplatte (22) und der Unterplatte (24) der mehrteiligen Giessplatte (20) eingelegte genannte Einsatzplatte (23) als eine eine kleine Dicke aufweisende und aus Blech bestehende Einsatzplatte ausgefuehrt ist, die lediglich mit den die Durchgangsoeffnungen (25b, 25b') der Eingangskanaele (25) in die unteren Kammern (29, 29') bildenden Bohrungen versehen ist.

19. Mehrteilige Giessplatte nach einem oder mehreren der vorhergehenden Ansprueche, dadurch gekennzeichnet, dass die Verteilungskammern (29, 29'; 31, 31') und die Verteilungsschieber (30, 30'; 33, 33') eine Laengserstreckung in der Querrichtung in bezug auf die Zufuhrrichtung der darunterliegenden Giessformen (28, 4) aufweisen, wobei die Schieber (9; 30, 30'; 33, 33') vorzugsweise von einer Stirnseite der mehrteiligen Giessplatte (1; 20) abstehen.

20. Giessmaschine mit hin- und hergehenden Kolben bzw. mit drehbaren Kolben, dadurch gekennzeichnet, dass dieselbe mit einer mehrteiligen Giessplatte (1; 20) nach einem oder mehreren der vorhergehenden Ansprueche versehen ist.

21. Giessanlage enthaltend eine oder mehrere Giessmaschinen mit hin- und hergehenden Kolben bzw. mit rotierenden Kolben, dadurch gekennzeichnet, dass dieselbe eine mehrteilige Giessplatte (1; 20) nach einem oder mehreren der vorhergehenden Ansprueche aufweist.

22. Anwendung einer mehrteiligen Giessplatte (1; 20) mit Verteilungsschieber (9, 45) nach einem oder mehreren der vorhergehenden Ansprueche in einer Giessmaschine bzw. Giessanlage fuer Schokolade fuer massive bzw. gefuellte Produkte.

0248232

FIG. 1

FIG. 2

FIG. 3

FIG. 4

FIG. 5

FIG. 6

FIG. 7

FIG. 9

FIG. 10

0248232

FIG. 10

FIG. 11

FIG. 12

0248232

FIG.13

FIG. 14

FIG. 15

FIG. 16